# EUROPEAN PATENT APPLICATION

(11) **EP 4 125 302 A1**
(43) Date of publication of application: **01.02.2023**
(21) Application number: 22187887.9
(22) Date of filing: 29.07.2022
(51) Int. Cl.: H04W 76/38, H04W 88/02

(54) **METHODS AND APPARATUSES FOR IMPLEMENTING MUSIM GUARD TIMERS FOR NAS SIGNALING CONNECTION RELEASE AND REJECTION OF PAGING**

(30) Priority: 29.07.2021 US 202163226811 P; 26.05.2022 US 202217825447
(71) Applicant: MediaTek Inc., Hsinchu City 30078 (TW)
(72) Inventor: Lin, Yuan-Chieh, Hsinchu City (TW)
(74) Representative: Habermann, Hruschka & Schnabel

(57) **Abstract**

A method of handling NAS signaling connection release using guard timers for UE supporting MUSIM in an EPS/5GS network is proposed. When a UE establishes a NAS signaling connection over a first USIM, the UE may need to switch a second USIM due to more important activities on the second USIM. If both the UE and the network support the feature of releasing the NAS signalling connection or rejection of paging, the UE can set a Request type to "NAS Signaling connection release" or "Rejection of paging" in a request message. In order to guarantee the release of the NAS signaling connection over the first USIM, the UE can start a guard timer upon receiving an accept message from the network. The UE can locally release the NAS signaling connection upon timer expiry to improve service on the second USIM.

## Description

### CROSS REFERENCE TO RELATED APPLICATION

This application claims priority under 35 U.S.C. §119 from U.S. Provisional Application Number 63/226,811 entitled "MUSIM Guard Timers and Interpretation of Paging Restriction," filed on July 29, 2021, the subject matter of which is incorporated herein by reference.

### TECHNICAL FIELD

The disclosed embodiments relate generally to wireless communication systems, and, more particularly, to release NAS signaling connection upon guard timer expiry for MUSIM UEs when the UE requests "NAS signalling connection release" or "Rejection of paging" to the network.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (e.g., eNodeBs or eNBs) communicating with a plurality of mobile stations, referred to as user equipments (UEs). The 3rd generation partner project (3GPP) network normally includes a hybrid of 2G/3G/4G systems. The Next Generation Mobile Network (NGMN) board, has decided to focus the future NGMN activities on defining the end-to-end requirements for 5G new radio (NR) systems. The base stations in 5G NR systems are referred to as Next Generation Node-Bs (e.g., gNodeBs or gNBs).

Non-access stratum (NAS) is used to convey non-radio signalling between UE and the Mobility Management Entity (MME) or the Access and Mobility Management Function (AMF) for an LTE/NR access. A NAS signaling connection can be established via an Attach procedure in 4G/LTE or via a Registration procedure in 5G/NR, involving UE subscription and identity. The universal subscriber identity module (USIM) is one of several software applications that resides in the UE, called the universal integrated circuit card (UICC). As smartphones and services became more affordable, their users have tended to use different mobile subscriptions (i.e., USIM cards) for travel, business, and personal needs. Many UEs now support multiple USIM cards (MUSIM) for registration and operation over different USIM simultaneously.

When a UE establishes a NAS signaling connection over on a first USIM, the UE may need to switch a second USIM due to more important activities on the second USIM. If the UE supports MUSIM and requests the network to release the NAS signalling connection or reject the paging request over the first USIM, the UE can set the Request type to "NAS Signaling connection release" or "Rejection of paging" in the UE request type IE in a REGISTRATION REQUEST message, a TRACKING AREA UPDATE REQUEST message, an EXTENDED SERVICE REQUEST message, a CONTROL PLANE SERVICE REQUEST message, or a SERVICE REQUEST message. Over the same NAS signaling connection, the UE then receives a TRACKING AREA UPDATE ACCEPT message, a REGISTRATION ACCEPT message, a SERVICE ACCEPT message, or a CONFIGURATION UPDATE COMMAND message. Subsequently, the UE should receive an indication from the network/lower-layers that the connection is released over the first USIM.

However, the UE may not receive the indication from the network/lower-layers that the connection is released for a long time, and thus not able to release the radio resources consumed over the first USIM. A solution is desired to handle the scenario such that the UE can switch to the second USIM for performing other more important activities.

### SUMMARY

A method of handling NAS signaling connection release using guard timers for UE supporting MUSIM in an EPS/5GS network is proposed. When a UE establishes a NAS signaling connection over a first USIM, the UE may need to switch a second USIM due to more important activities on the second USIM. If both the UE and the network support the feature of releasing the NAS signalling connection, the UE can set a Request type to "NAS Signaling connection release" in a UE request type IE of a registration/TAU or service request message. If both the UE and the network support the feature of Rejection of paging, the UE can set a Request type to "Rejection of paging" in a UE request type IE of a service request message, extended service request or control plane service request message. In order to guarantee the release of the NAS signaling connection over the first USIM to release the occupied hardware resource used for the first USIM, the UE can start a guard timer upon receiving a registration/TAU or service accept message (and configuration update command message in 5G) from the network. The UE can locally release the NAS signaling connection upon timer expiry to improve service on the second USIM.

In one embodiment, a UE establishes a non-access stratum (NAS) signaling connection in a wireless communication network. The UE supports multiple universal subscriber identity module (MUSIM) and the NAS signaling connection is established on a first USIM. The UE transmits a request message to the network in response to a trigger condition related to a second USIM. For example, USIM 2 is starting to do a very import job like mobile originated voice call while USIM 1 is occupying the RF hardware resource doing non-urgent jobs like background download a new version of Android OS image. The request message has a request type indicating to release the NAS signaling connection. The UE starts a timer in response to receiving an accept message from the network. If the accept message is a TRACKING AREA UPDATE ACCEPT message or a REGISTRATION ACCEPT message, then it indicates that a NAS signaling connection release feature is supported by the network. The UE locally releases the established NAS signaling connection on the first USIM upon expiry of the timer.

In another embodiment, a UE establishes a non-access stratum (NAS) signaling connection in a wireless communication network. The UE supports multiple universal subscriber identity module (MUSIM) and the NAS signaling connection is established on a first USIM. The UE transfers data or receives a paging on the first USIM. The UE transmits a request message to the network in response to a trigger condition related to a second USIM. The request message has a request type indicating to release the NAS signaling connection (e.g., USIM 2 is starting to do a very import job like mobile originated voice call while USIM 1 is occupying the RF hardware resource doing non-urgent jobs like background download a new version of Android OS image) or to reject the paging (e.g., USIM 2 is currently doing a very import job like mobile originated voice call while USIM 1 receives a paging). The UE starts a timer in response to receiving an accept message (and optionally a configuration update command message) from the network. The UE locally releases the established NAS signaling connection on the first USIM upon expiry of the timer.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a user equipment (UE) handling NAS signaling connection release for supporting Multiple USIM (MUSIM) in an EPS/5GS network in accordance with one novel aspect.
Figure 2 is a simplified block diagram of a UE and a base station in accordance with various embodiments of the present invention.
Figure 3 illustrates one embodiment of NAS signaling connection release under ATTACH/TAU procedure in LTE network in accordance with one novel aspect.
Figure 4 illustrates another embodiment of NAS signaling connection release under ATTACH/TAU procedure in LTE network in accordance with one novel aspect.
Figure 5 illustrates one embodiment of NAS signaling connection release under SERVICE REQUEST procedure in LTE network in accordance with one novel aspect.
Figure 6 illustrates one embodiment of Rejection of paging under SERVICE REQUEST procedure in LTE network in accordance with one novel aspect.
Figure 7 illustrates one embodiment of NAS signaling connection release under REGISTRATION procedure in 5G NR network in accordance with one novel aspect.
Figure 8 illustrates another embodiment of NAS signaling connection release under REGISTRATION procedure in 5G NR network in accordance with one novel aspect.
Figure 9 illustrates one embodiment of NAS signaling connection release under SERVICE REQUEST procedure in 5G NR network in accordance with one novel aspect.
Figure 10 illustrates one embodiment of Rejection of paging under SERVICE REQUEST procedure in 5G NR network in accordance with one novel aspect.
Figure 11 is a flow chart of a method of handling NAS signaling connection release under registration procedure in a 5G/NR network in accordance with one novel aspect of the present invention.
Figure 12 is a flow chart of a method of handling NAS signaling connection release under service request procedure in a 5G/NR network in accordance with one novel aspect of the present invention.

### DETAILED DESCRIPTION

Reference will now be made in detail to some embodiments of the invention, examples of which are illustrated in the accompanying drawings.

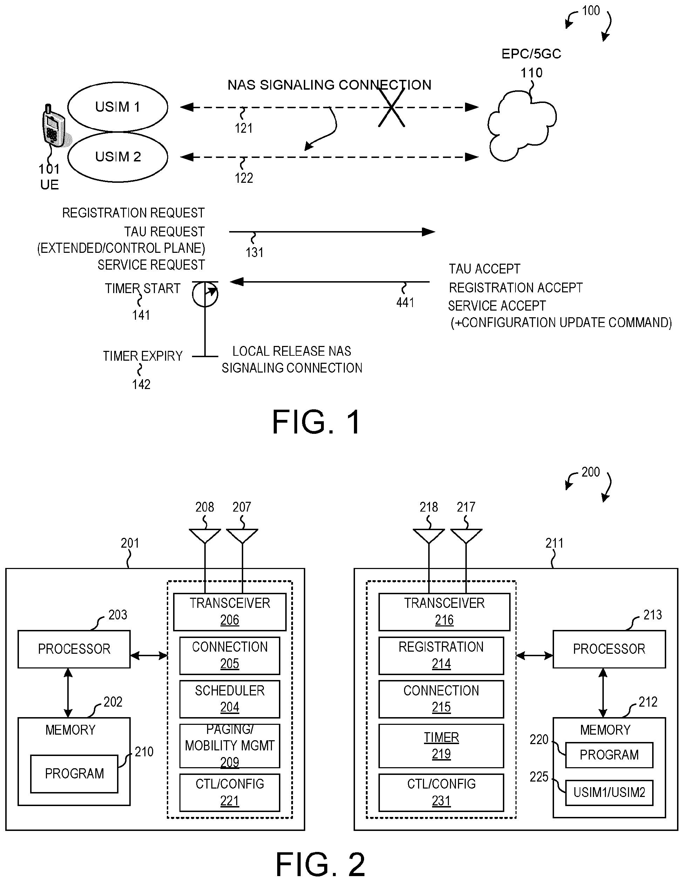

Figure 1 illustrates a user equipment (UE) handling NAS signaling connection release for supporting Multiple USIM (MUSIM) in an EPS/5GS network 100 in accordance with one novel aspect. In 3GPP NR, 5G NR access network (a plurality of base stations, e.g., Next Generation Node-Bs (gNBs), communicating with a plurality of mobile stations referred as user equipment (UEs). Orthogonal Frequency Division Multiple Access (OFDMA) has been selected for NR downlink (DL) radio access scheme due to its robustness to multipath fading, higher spectral efficiency, and bandwidth scalability. In both LTE and NR networks, Physical Downlink Control Channel (PDCCH) is used for downlink scheduling. Physical Downlink Shared Channel (PDSCH) is used for downlink data. Similarly, Physical Uplink Control Channel (PUCCH) is used for carrying uplink control information. Physical Uplink Shared Channel (PUSCH) is used for uplink data. In addition, physical random-access channel (PRACH) is used for non-contention-based RACH.

On the other hand, Non-access stratum (NAS) is used to convey non-radio signalling between UE and the Mobility Management Entity (MME) or the Access and Mobility Management Function (AMF) for an LTE/NR access. In the example of Figure 1, UE 101 supports multiple universal subscriber identity module (MUSIM) for registration and operation with EPC/5GC 110 over different USIM simultaneously. The two or more different USIMs can register to same EPS, same 5Gs, different EPSs, different 5GSs, or one or more EPS and one or more 5GS. When UE 101 establishes a NAS signaling connection over on a first USIM (121), the UE may need to switch a second USIM due to more important activities on the second USIM (122). If UE 101 requests the network to release the NAS signalling connection over the first USIM, the UE can set the Request type to "NAS Signaling connection release" or "Rejection of paging" in the UE request type IE in a REGISTRATION REQUEST message, a TRACKING AREA UPDATE REQUEST message, an EXTENDED SERVICE REQUEST message, a CONTROL PLANE SERVICE REQUEST message, or a SERVICE REQUEST message (131). Over the same NAS signaling connection, UE 101 receives a TRACKING AREA UPDATE ACCEPT message, a REGISTRATION ACCEPT message, a SERVICE ACCEPT message, or a CONFIGURATION UPDATE COMMAND message (132).

Subsequently, UE 101 should receive a release of the NAS signaling connection over the first USIM (such release is triggered by the network, and indicated from UE AS layer to NAS layer). However, UE 101 may not receive the NAS signaling connection release for a long time. In order to guarantee the release of the NAS signaling connection over the first USIM, the UE can start a guard timer (T3440, or T3540) upon receiving the TRACKING AREA UPDATE ACCEPT message, the REGISTRATION ACCEPT message, the SERVICE ACCEPT message, or the CONFIGURATION UPDATE COMMAND message from the network (141). UE 101 can locally release the NAS signaling connection upon timer expiry to improve service on the second USIM (142).

Figure 2 is a simplified block diagram of wireless devices 201 and 211 in accordance with embodiments of the present invention. For wireless device 201 (e.g., a base station), antennae 207 and 208 transmit and receive radio signal. RF transceiver module 206, coupled with the antennae, receives RF signals from the antennae, converts them to baseband signals and sends them to processor 203. RF transceiver 206 also converts received baseband signals from the processor, converts them to RF signals, and sends out to antennae 207 and 208. Processor 203 processes the received baseband signals and invokes different functional modules and circuits to perform features in wireless device 201. Memory 202 stores program instructions and data 210 to control the operations of device 201.

Similarly, for wireless device 211 (e.g., a user equipment), antennae 217 and 218 transmit and receive RF signals. RF transceiver module 216, coupled with the antennae, receives RF signals from the antennae, converts them to baseband signals and sends them to processor 213. The RF transceiver 216 also converts received baseband signals from the processor, converts them to RF signals, and sends out to antennae 217 and 218. Processor 213 processes the received baseband signals and invokes different functional modules and circuits to perform features in wireless device 211. Memory 212 stores program instructions and data 220 and multiple USIM cards 225 to control the operations of the wireless device 211.

The wireless devices 201 and 211 also include several functional modules and circuits that can be implemented and configured to perform embodiments of the present invention. In the example of Figure 2, wireless device 201 is a base station that includes an RRC connection handling module 205, a scheduler 204, a paging and mobility management module 209, and a control and configuration circuit 221. Wireless device 211 is a UE that includes a connection handling module 215, a registration module 214, a paging and mobility handling module 219, and a control and configuration circuit 231. Note that a wireless device may be both a transmitting device and a receiving device. The different functional modules and circuits can be implemented and configured by software, firmware, hardware, and any combination thereof. The function modules and circuits, when executed by the processors 203 and 213 (e.g., via executing program codes 210 and 220), allow base station 201 and UE 211 to perform embodiments of the present invention.

In one example, the base station 201 establishes signaling connection with the UE 211 via connection handling circuit 205, schedules downlink and uplink transmission for UEs via scheduler 204, performs paging, mobility, and handover management via mobility management module 209, and provides control and configuration information to UEs via configuration circuit 221. The UE 211 performs registration with the network via registration module 214, establishes signaling connection via connection handling circuit 215, maintains timer 219, and obtains configuration information via control and configuration circuit 231. In one novel aspect, UE 211 supports MUSIM and uses a guard timer to handle the release of a NAS signaling connection over one USIM to improve the service of another USIM.

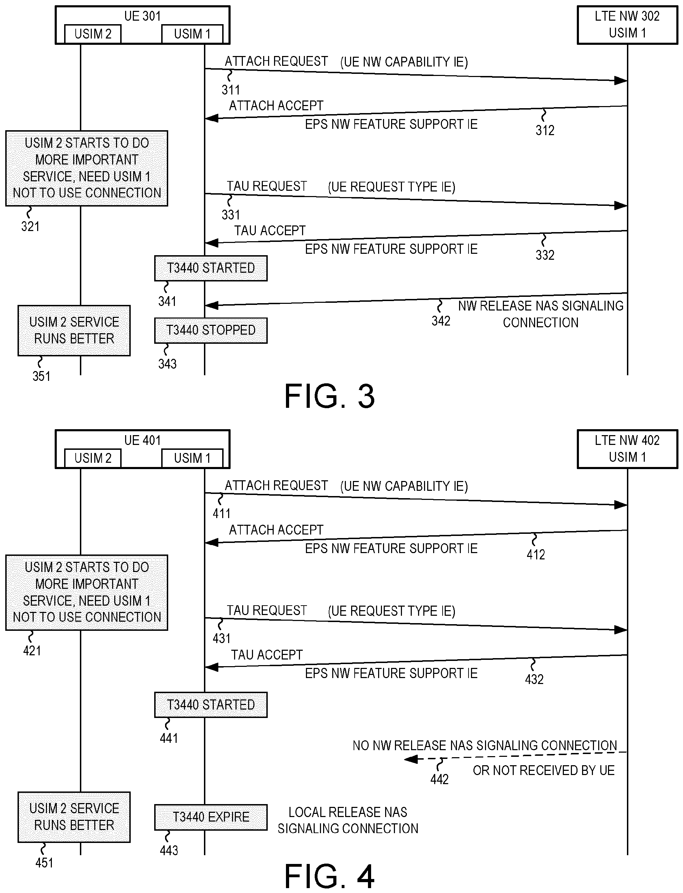

Figure 3 illustrates one embodiment of NAS signaling connection release under ATTACH/TAU procedure in LTE/EPS network in accordance with one novel aspect. UE 301 is equipped with multiple USIMs, e.g., USIM1 and USIM2. In step 311, UE 301 sends an ATTACH REQUEST message to the LTE network 302 over USIM1. The ATTACH REQUEST message carries a UE network capability IE, which includes a NAS signaling connection release bit that is set to "NAS signaling connection release supported". In step 312, UE 301 receives an ATTACH ACCEPT message from the LTE network over USIM1. The ATTACH ACCEPT message carries an EPS network feature support IE, which includes a NAS signaling connection release bit that is set to "NAS signaling connection release supported". At this point, UE 301 knows that the LTE network supports NAS signaling connection release requested by the UE. Later the NAS signalling connection used for the ATTACH procedure may be released by the network due to long time no activity (e.g., no data transfer for over 10 seconds), or kept by the network. Even if the NAS signalling connection used for the ATTACH procedure is released by the network, later the UE or the network can establish it again if there is uplink or downlink data need to be transferred.

In step 321, the USIM2 on UE 301 starts to do more important service, and if the USIM1 currently has established NAS signalling connection, then the UE needs USIM1 to stop using the NAS signaling connection. In step 331, if the UE needs to request to release the NAS signaling connection as step 321 and at the same moment also the condition to trigger a mobility TAU procedure is satisfied, then UE 301 sends a TAU REQUEST message to the LTE network over USIM1. The TAU REQUEST message carries a UE request type IE, which includes a request type that is set to "NAS signaling connection release". In step 332, UE 301 receives a TAU ACCEPT message from the LTE/EPS network over USIM1. The TAU ACCEPT message carries an EPS network feature support IE, which includes a NAS signaling connection release bit that is set to "NAS signaling connection release supported". Note that upon the TAU procedure, the feature of supporting NAS signaling connection release may have changed. Thus, it is necessary for the network to indicate such feature support (in a new TAI of UE current location) again through the TAU ACCEPT message. In step 341, UE 301 starts a timer (T3440) upon receiving the TAU ACCEPT message. In step 342, the LTE network releases the NAS signaling connection over USIM1. In step 343, UE 301 stops the timer T3440 and releases the NAS signaling connection over USIM1 in response to the network release. As a result, in step 351, the services on USIM2 runs with better performance.

Figure 4 illustrates another embodiment of NAS signaling connection release under ATTACH/TAU procedure in LTE network in accordance with one novel aspect. In the embodiment of Figure 4, the steps 411 to 441 are similar to the steps 311 to 341 of the embodiment illustrated in Figure 3. However, in step 442, the LTE network 402 does not releases the NAS signaling connection over USIM1, or the LTE network triggers the release, but the related message (e.g., RRCRelease message or RRCConnectionRelease message) is not received by UE 401. In step 443, the timer T3440 expires. In response, UE 401 locally releases the NAS signaling connection over USIM1. As a result, in step 451, the services on USIM2 runs with better performance.

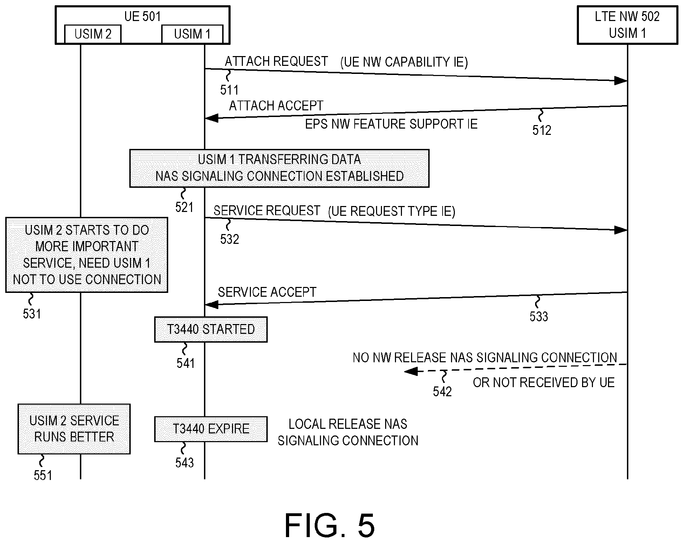

Figure 5 illustrates one embodiment of NAS signaling connection release under SERVICE REQUEST procedure in LTE network in accordance with one novel aspect. UE 501 is equipped with multiple USIMs, e.g., USIM1 and USIM2. In step 511, UE 501 sends an ATTACH REQUEST message to the LTE network 502 over USIM1. The ATTACH REQUEST message carries a UE network capability IE, which includes a NAS signaling connection release bit that is set to "NAS signaling connection release supported". In step 512, UE 501 receives an ATTACH ACCEPT message from the LTE network over USIM1. The ATTACH ACCEPT message carries an EPS network feature support IE, which includes a NAS signaling connection release bit that is set to "NAS signaling connection release supported". At this point, UE 501 knows that the LTE network supports NAS signaling connection release requested by the UE. In step 521, UE 501 starts transferring data over USIM1, the NAS signaling connection is established over USIM1.

In step 531, the USIM2 on UE 501 starts to do more important service, and needs USIM1 to stop using the NAS signaling connection. In step 532, UE 501 sends an EXTENDED SERVICE REQUEST message or a CONTROL PLANE SERVICE REQUEST message to the LTE network over USIM1, e.g., triggered by step 531. The SERVICE REQUEST message carries a UE request type IE, which includes a request type that is set to "NAS signaling connection release". In step 533, UE 501 receives a SERVICE ACCEPT message from the LTE network over USIM1. In step 541, UE 501 starts a timer (T3440) upon receiving the SERVICE ACCEPT message. In step 542, the LTE network 502 does not release the NAS signaling connection over USIM1, or the LTE network triggers the release, but is not received by UE 501 (e.g., UE fails to receive RRCRelease message or RRCConnectionRelease message). In step 543, the timer T3440 expires. In response, UE 501 locally releases the NAS signaling connection over USIM1. As a result, in step 551, the services on USIM2 runs with better performance.

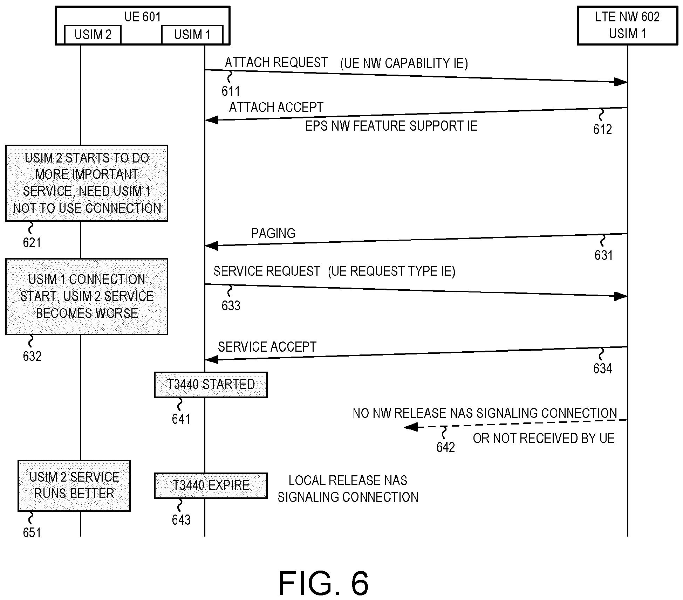

Figure 6 illustrates one embodiment of Rejection of paging under SERVICE REQUEST procedure in LTE network in accordance with one novel aspect. UE 601 is equipped with multiple USIMs, e.g., USIM1 and USIM2. In step 611, UE 601 sends an ATTACH REQUEST message to the LTE network 602 over USIM1. The ATTACH REQUEST message carries a UE network capability IE, which includes a reject paging request bit that is set to "reject paging request supported". In step 612, UE 601 receives a REGISTRATION ACCEPT message from the LTE network over USIM1. The ATTACH ACCEPT message carries an EPS network feature support IE, which includes a reject paging request bit that is set to "reject paging request supported". At this point, UE 601 knows that the LTE network supports NAS signaling connection release upon receiving a paging rejection. In step 621, the USIM2 on UE 501 starts to do more important service, and needs USIM1 not to use the NAS signaling connection.

In step 631, UE 601 receives a paging of USIM1 from LTE network 602. As a result, in step 632, USIM2 service becomes worse as USIM1 connection starts. In order to improve USIM2 service that is more important, in step 633, UE 601 sends an EXTENDED SERVICE REQUEST message or a CONTROL PLANE SERVICE REQUEST message to the LTE network over USIM1. The SERVICE REQUEST message carries a UE request type IE, which includes a request type that is set to "Rejection of paging". In step 634, UE 601 receives a SERVICE ACCEPT message from the LTE network over USIM1. Note that in order to reject the paging, a NAS signaling connection is established for the purpose of sending the SERVICE REQUEST to the network, and the network should release this NAS signaling connection immediately after sending the SERVICE ACCEPT to the UE. In step 641, UE 601 starts a timer (T3440) upon receiving the SERVICE ACCEPT message. In step 642, the LTE network 602 does not release the NAS signaling connection over USIM1, or the LTE network triggers the release, but is not received by UE 601 (e.g., UE fails to receive RRCRelease message or RRCConnectionRelease message). In step 643, the timer T3440 expires. In response, UE 601 locally releases the NAS signaling connection over USIM1. As a result, in step 651, the services on USIM2 runs with better performance.

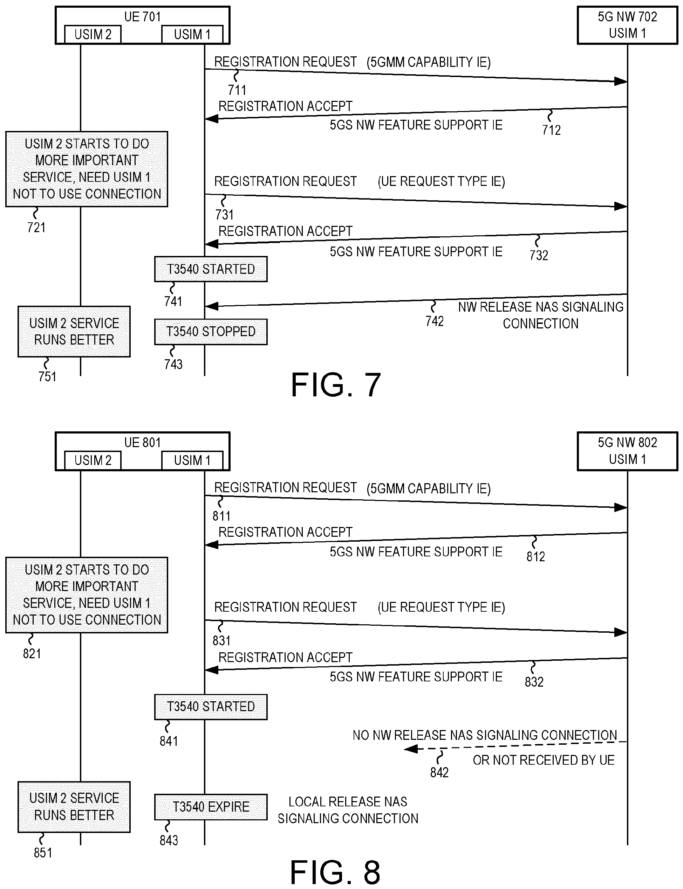

Figure 7 illustrates one embodiment of NAS signaling connection release under REGISTRATION procedure in 5G NR network in accordance with one novel aspect. UE 701 is equipped with multiple USIMs, e.g., USIM1 and USIM2. In step 711, UE 701 sends a REGISTRATION REQUEST message to the 5G network 702 over USIM1. The REGISTRATION REQUEST message carries a 5GMM capability IE, which includes an N1 NAS signaling connection release bit that is set to "N1 NAS signaling connection release supported". In step 712, UE 701 receives a REGISTRATION ACCEPT message from the 5G network over USIM1. The REGISTRATION ACCEPT message carries an 5GS network feature support IE, which includes an N1 NAS signaling connection release bit that is set to "N1 NAS signaling connection release supported". UE 701 knows that the 5G network supports NAS signaling connection release requested by the UE.

In step 721, the USIM2 on UE 701 starts to do more important service, and if at the same moment the USIM1 has established NAS signaling connection, then UE needs USIM1 to stop using the NAS signaling connection. In step 731, if the UE happen to need to do registration procedure e.g., due to mobility out of registration area, then UE 701 sends a REGISTRATION REQUEST message to the 5G network over USIM1. The REGISTRATION REQUEST message carries a UE request type IE, which includes a request type that is set to "NAS signaling connection release". In step 732, UE 701 receives a REGISTRATION ACCEPT message from the 5G network over USIM1. The REGISTRATION ACCEPT message carries a 5GS network feature support IE, which includes an N1 NAS signaling connection release bit that is set to "N1 NAS signaling connection release supported". Note that upon the second registration procedure, the feature of supporting NAS signaling connection release may have changed. Thus, it is necessary for the 5G network to indicate such feature support again through the REGISTRATION ACCEPT message. In step 741, UE 701 starts a timer (T3540) upon receiving the REGISTRATION ACCEPT message. In step 742, the 5G network releases the NAS signaling connection over USIM1. In step 743, UE 701 stops the timer T3540. As a result, in step 751, the services on USIM2 runs with better performance.

Figure 8 illustrates another embodiment of NAS signaling connection release under REGISTRATION procedure in 5G NR network in accordance with one novel aspect. In the embodiment of Figure 8, the steps 811 to 841 are similar to the steps 711 to 741 of the embodiment illustrated in Figure 7. However, in step 842, the 5G network 802 does not release the NAS signaling connection over USIM1, or the 5G network triggers the release, but is not received by UE 801 (e.g., UE fails to receive RRCRelease message or RRCConnectionRelease message). In step 843, the timer T3540 expires. In response, UE 801 locally releases the NAS signaling connection over USIM1. As a result, in step 851, the services on USIM2 runs with better performance.

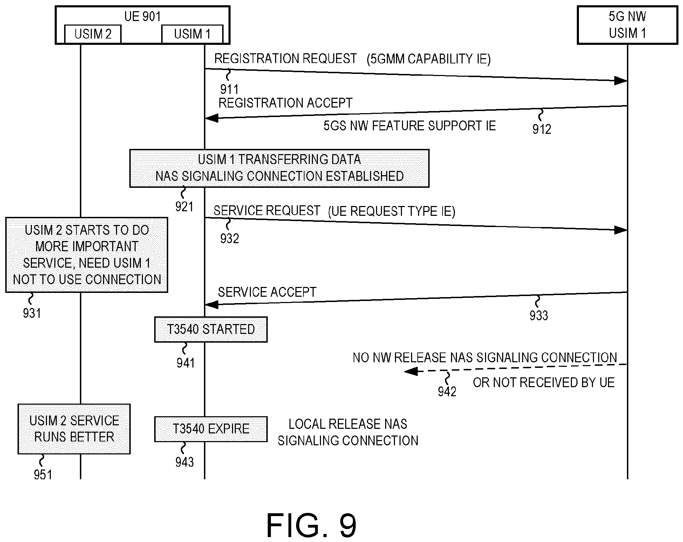

Figure 9 illustrates one embodiment of NAS signaling connection release under SERVICE REQUEST procedure in 5G NR network in accordance with one novel aspect. UE 901 is equipped with multiple USIMs, e.g., USIM1 and USIM2. In step 911, UE 901 sends a REGISTRATION REQUEST message to the 5G network 902 over USIM1. The REGISTRATION REQUEST message carries a 5GMM capability IE, which includes an N1 NAS signaling connection release bit that is set to "N1 NAS signaling connection release supported". In step 912, UE 901 receives a REGISTRATION ACCEPT message from the 5G network over USIM1. The REGISTRATION ACCEPT message carries a 5GS network feature support IE, which includes an N1 NAS signaling connection release bit that is set to "N1 NAS signaling connection release supported". At this point, UE 901 knows that the 5G network supports NAS signaling connection release requested by the UE. In step 921, UE 901 starts transferring data over USIM1, the NAS signaling connection is established over USIM1.

In step 931, the USIM2 on UE 901 starts to do more important service, and needs USIM1 to stop using the NAS signaling connection. In step 932, UE 901 sends SERVICE REQUEST message or a CONTROL PLANE SERVICE REQUEST message to the 5G network over USIM1. The SERVICE REQUEST message carries a UE request type IE, which includes a request type that is set to "NAS signaling connection release". In step 933, UE 901 receives a SERVICE ACCEPT message from the 5G network over USIM1. In step 941, UE 901 starts a timer (T3540) upon receiving the SERVICE ACCEPT message. In step 942, the 5G network 902 does not release the NAS signaling connection over USIM1, or the 5G network triggers the release, but is not received by UE 901(e.g., UE fails to receive RRCRelease message or RRCConnectionRelease message). In step 943, the timer T3540 expires. In response, UE 901 locally releases the NAS signaling connection over USIM1. As a result, in step 951, the services on USIM2 runs with better performance.

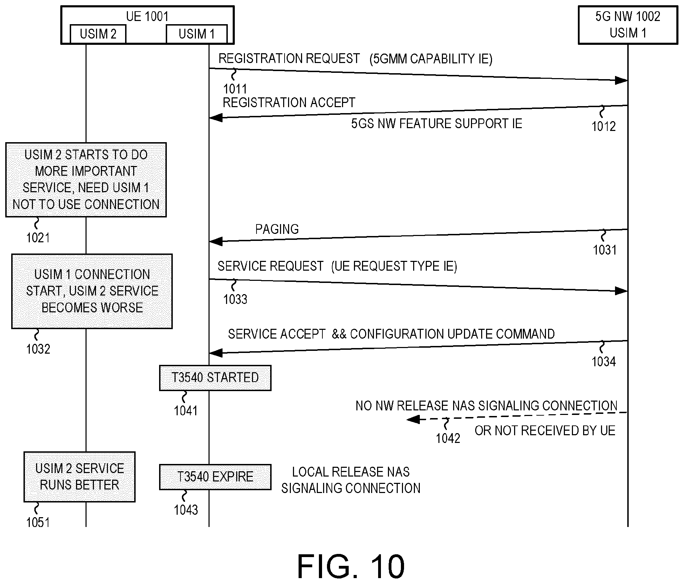

Figure 10 illustrates one embodiment of Rejection of paging under SERVICE REQUEST procedure in 5G NR network in accordance with one novel aspect. UE 1001 is equipped with multiple USIMs, e.g., USIM1 and USIM2. In step 1011, UE 1001 sends a REGISTRATION REQUEST message to the 5G network 1002 over USIM1. The REGISTRATION REQUEST message carries a 5GMM capability IE, which includes a reject paging request bit that is set to "reject paging request supported". In step 1012, UE 1001 receives a REGISTRATION ACCEPT message from the 5G network over USIM1. The REGISTRATION ACCEPT message carries a 5GS network feature support IE, which includes a reject paging request bit that is set to "reject paging request supported". At this point, UE 1001 knows that the 5G network supports NAS signaling connection release upon receiving a paging rejection. In step 1021, the USIM2 on UE 1001 starts to do more important service, and needs USIM1 not to use the NAS signaling connection.

In step 1031, UE 1001 receives a paging from 5G network 1002. As a result, in step 1032, USIM2 service becomes worse after USIM1 connection starts. In order to improve USIM2 service that is more important, in step 1033, UE 1001 sends a SERVICE REQUEST message or a CONTROL PLANE SERVICE REQUEST message to the 5G network over USIM1. The SERVICE REQUEST message carries a UE request type IE, which includes a request type that is set to "Rejection of paging". In step 1034, UE 1001 receives a SERVICE ACCEPT message and a CONFIGURATION UPDATE COMMAND from the 5G network over USIM1. The order of receiving the SERVICE ACCEPT message and the CONFIGURATION UPDATE COMMAND can be: (1) receiving the SERVICE ACCEPT message first and the CONFIGURATION UPDATE COMMAND second, or (2) receiving the CONFIGURATION UPDATE COMMAND message first and the SERVICE ACCEPT second. Note that in order to reject the paging, a NAS signaling connection is established for the purpose of sending the SERVICE REQUEST to the network, and the network should release this NAS signaling connection immediately after sending the SERVICE ACCEPT and the CONFIGURATION UPDATE COMMAND to the UE. In step 1041, UE 1001 starts a timer (T3540) upon receiving the SERVICE ACCEPT message and the CONFIGURATION UPDATE COMMAND. In step 1042, the 5G network 1002 does not release the NAS signaling connection over USIM1, or the 5G network triggers the release, but is not received by UE 1001 (e.g., UE fails to receive RRCRelease message or RRCConnectionRelease message). In step 1043, the timer T3540 expires. In response, UE 1001 locally releases the NAS signaling connection over USIM1. As a result, in step 1051, the services on USIM2 runs with better performance.

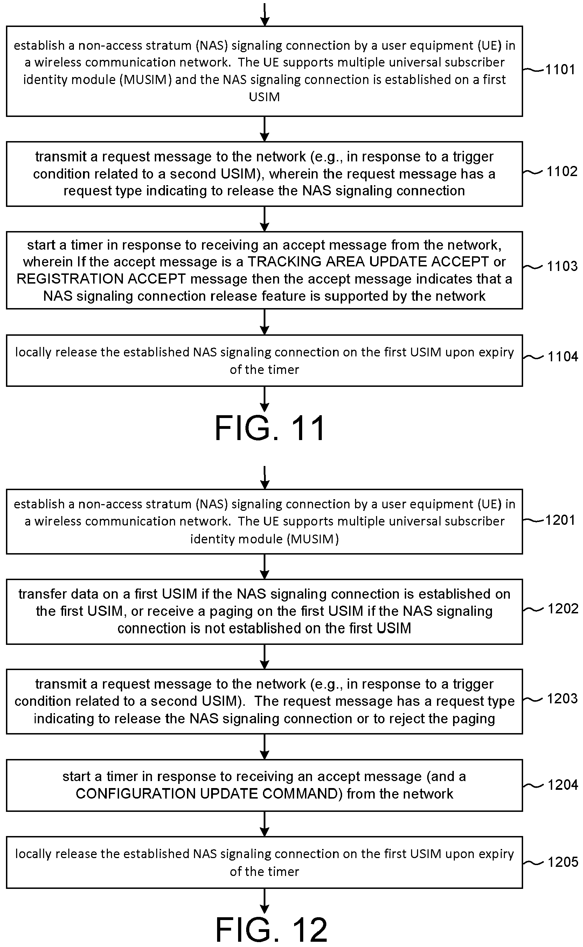

Figure 11 is a flow chart of a method of handling NAS signaling connection release under registration procedure in a 5G/NR network in accordance with one novel aspect of the present invention. In step 1101, a UE establishes a non-access stratum (NAS) signaling connection in a wireless communication network. The UE supports multiple universal subscriber identity module (MUSIM) and the NAS signaling connection is established on a first USIM. In step 1102, the UE transmits a request message to the network (e.g., in response to a trigger condition related to a second USIM). The request message has a request type indicating to release the NAS signaling connection. In step 1103, the UE starts a timer in response to receiving an accept message from the network. If the accept message is a TRACKING AREA UPDATE ACCEPT message or a REGISTRATION ACCEPT message then the accept message indicates that a NAS signaling connection release feature is supported by the network. In step 1104, the UE locally releases the established NAS signaling connection on the first USIM upon expiry of the timer.

Figure 12 is a flow chart of a method of handling NAS signaling connection release under service request procedure in a 5G/NR network in accordance with one novel aspect of the present invention. In step 1201, a UE establishes a non-access stratum (NAS) signaling connection in a wireless communication network. The UE supports multiple universal subscriber identity module (MUSIM). In step 1202, the UE transfers data if the NAS signaling connection is established on a first USIM, or receives a paging if the NAS signaling connection is not established on the first USIM. In step 1203, the UE transmits a request message to the network (e.g., in response to a trigger condition related to a second USIM). The request message has a request type indicating to release the NAS signaling connection or to reject the paging. In step 1204, the UE starts a timer in response to receiving an accept message (and a CONFIGURATION UPDATE COMMAND message) from the network. In step 1205, the UE locally releases the established NAS signaling connection on the first USIM upon expiry of the timer.

Although the present invention is described above in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
establishing a non-access stratum (NAS) signaling connection by a user equipment (UE) in a wireless communication network, wherein the UE supports multiple universal subscriber identity module (MUSIM) and the NAS signaling connection is established on a first USIM;
transmitting a request message to the network, wherein the request message has a request type indicating to release the NAS signaling connection;
starting a timer in response to receiving an accept message from the network, wherein the accept message indicates that a NAS signaling connection release feature is supported by the network; and
locally releasing the established NAS signaling connection on the first USIM upon expiry of the timer.

2. The method of Claim 1, wherein the network is an EPS network, and the request message is a TRACKING AREA UPDATE REQUEST message; and
wherein the accept message is a TRACKING AREA UPDATE ACCEPT message carrying an EPS network feature support IE having a NAS signaling connection release bit set to "NAS signaling connection release supported".

3. The method of Claim 1, wherein the network is a 5GS network, and the request message is a REGISTRATION REQUEST message, and
wherein the accept message is a REGISTRATION ACCEPT message carrying an 5GS network feature support IE having a NAS signaling connection release bit set to "N1 NAS signaling connection release supported".

4. A User Equipment (UE), comprising:
a connection handling circuit that establishes a non-access stratum (NAS) signaling connection in a wireless communication network, wherein the UE supports multiple universal subscriber identity module (MUSIM) and the NAS signaling connection is established on a first USIM;
a transmitter that transmits a request message to the network, wherein the request message has a request type indicating to release the NAS signaling connection; and
a timer that is started in response to receiving an accept message from the network, wherein the accept message indicates that a NAS signaling connection release feature is supported by the network, wherein the UE locally releases the established NAS signaling connection on the first USIM upon expiry of the timer.

5. The UE of Claim 4, wherein the network is an EPS network, and the request message is a TRACKING AREA UPDATE REQUEST message, and
wherein the accept message is a TRACKING AREA UPDATE ACCEPT message carrying an EPS network feature support IE having a NAS signaling connection release bit set to "NAS signaling connection release supported".

6. The UE of Claim 4, wherein the network is a 5GS network, and the request message is a REGISTRATION REQUEST message, and
wherein the accept message is a REGISTRATION ACCEPT message carrying an 5GS network feature support IE having a NAS signaling connection release bit set to "N1 NAS signaling connection release supported".

7. A method, comprising:
establishing a non-access stratum (NAS) signaling connection by a user equipment (UE) in a wireless communication network, wherein the UE supports multiple universal subscriber identity module (MUSIM);
transferring data on a first USIM if the NAS signaling connection is established on the first USIM, or receiving a paging on the first USIM if the NAS signaling connection is not established on the first USIM;
transmitting a request message to the network, wherein the request message has a request type indicating to release the NAS signaling connection or to reject the paging;
starting a timer in response to receiving one or more messages from the network; and
locally releasing the established NAS signaling connection on the first USIM upon expiry of the timer.

8. The method of Claim 7, wherein the network is an EPS network, and the request message is an EXTENDED SERVICE REQUEST message or a CONTROL PLANE SERVICE REQUEST message.

9. The method of Claim 7, wherein the network is a 5GS network, and the request message is a SERVICE REQUEST message or a CONTROL PLANE SERVICE REQUEST message.

10. The method of Claim 8 or 9, wherein the one or more messages is a SERVICE ACCEPT message.

11. The method of Claim 9, wherein the UE receives the paging and rejects the paging by transmitting a request message to the network has a request type indicating to reject the paging, and wherein the one or more messages are a SERVICE ACCEPT and a CONFIGURATION UPDATE COMMAND message, and wherein the UE starts the timer in response to receiving the SERVICE ACCEPT message as well as receiving a CONFIGURATION UPDATE COMMAND message from the network.

12. A User Equipment (UE), comprising:
a connection handling circuit that establishes a non-access stratum (NAS) signaling connection in a wireless communication network, wherein the UE supports multiple universal subscriber identity module (MUSIM), wherein the UE transfers data on a first USIM if the NAS signaling connection is established on the first USIM, or receives a paging on the first USIM if the NAS signaling connection is not established on the first USIM;
a transmitter that transmits a request message to the network, wherein the request message has a request type indicating to release the NAS signaling connection or to reject the paging; and
a timer that is started in response to receiving one or more messages from the network, wherein the UE locally releases the established NAS signaling connection on the first USIM upon expiry of the timer.

13. The UE of Claim 12, wherein the network is an EPS network, and the request message is an EXTENDED SERVICE REQUEST message or a CONTROL PLANE SERVICE REQUEST message.

14. The UE of Claim 12, wherein the network is a 5GS network, and the request message is a SERVICE REQUEST message or a CONTROL PLANE SERVICE REQUEST message.

15. The UE of Claim 13 or 14, wherein the one or more messages is a SERVICE ACCEPT message.

16. The UE of Claim 14, wherein the UE receives the paging and rejects the paging by transmitting a request message to the network has a request type indicating to reject the paging, and wherein the one or more messages are a SERVICE ACCEPT and a CONFIGURATION UPDATE COMMAND message, and wherein the UE starts the timer in response to receiving the SERVICE ACCEPT message as well as receiving a CONFIGURATION UPDATE COMMAND message from the network.
